# EUROPÄISCHE PATENTANMELDUNG

(11) **EP 4 147 820 A1**
(43) Veröffentlichungstag der Anmeldung: **15.03.2023**
(21) Anmeldenummer: 21196223.8
(22) Anmeldetag: 13.09.2021
(51) Int. Cl.: B23Q 17/00, B23B 31/02

(54) **SPANNVORRICHTUNG**

(71) Anmelder: SMW-AUTOBLOK Spannsysteme GmbH, 88074 Meckenbeuren (DE)
(72) Erfinder: MAURER, Eckhard, 88094 Oberteuringen (DE)
(74) Vertreter: Christ, Niko

(57) **Zusammenfassung**

Bei einer Spannvorrichtung (1) zur Halterung eines durch eine Werkzeugmaschine (2) zu bearbeitendes Werkstück (3), die als Spannfutter, Schraubstock oder Nullpunkt-Spannsystem verwendet ist, bestehend aus einem Gehäuse (4), einem Auflageelement (6), das Bestandteil des Gehäuses (4) ist oder an dieses befestigt ist, und durch das eine Auflagefläche (6') gebildet ist, auf der das jeweilige Werkstück (3) während des Bearbeitungsprozesses aufliegt, mindestens einer in dem Gehäuse (4) axial beweglich gelagerten Spannbacke (7) und einem von dem Gehäuse (4) gebildeten Gegenanschlag oder einer axial beweglichen Spannbacke (8), zwischen denen das Werkstück (3) im Bereich der Auflagefläche (6') eingespannt ist oder mindestens drei in dem Gehäuse (4) axial beweglich gelagerten Spannbacken (7, 8, 9), zwischen denen das Werkstück (3) im Bereich der Auflagefläche (6') eingespannt ist, soll an der Spannvorrichtung (1) vor und während des gesamten Bearbeitungsprozesses eine zuverlässige und überprüfbare Überwachung des Abstandes zwischen dem Werkstück (3) und der Auflagefläche (6') und/oder den Spannbacken (7, 8, 9) erfolgen, ohne dass hierfür umfangreiche konstruktive Maßnahmen erforderlich sind. Dies ist dadurch erreicht, dass in dem Gehäuse (4) mindestens ein Freiraum (11) eingearbeitet ist, dessen Symmetrieachse senkrecht zu der Auflagefläche (6') verläuft und der dem eingespannten Werkstück (3) mit der offenen Stirnseite zugewandt ist, und/oder dass in eine der Spannbacken (7, 8, 9) mindestens ein Freiraum (11) eingearbeitet ist, der in die jeweilige Spannfläche (7', 8', 9') der Spannbacken (7, 8, 9) mündet, dass in dem jeweiligen Freiraum (11) ein Näherungssensor (12) eingesetzt ist, dass durch den Näherungssensor (12) ein Überwachungsbereich (13) zwischen der Auflagefläche (6') und dem Werkstück (3) gebildet ist, der von einer Auswerteeinheit (14) in Bezug auf die Anwesenheit des Werkstückes (3) überwacht ist.

## Beschreibung

Die Erfindung bezieht sich auf eine Spannvorrichtung zur Halterung eines durch eine Werkzeugmaschine zu bearbeitendes Werkstück, die insbesondere als Spannfutter, Schraubstock oder Nullpunkt-Spannsystem verwendet ist, nach dem Oberbegriff des Patentanspruches 1.

Derartige Spannvorrichtungen können als Schraubstöcke mit einer oder zwei aufeinander zustellbaren und somit beweglich gelagerten Spannbacken ausgestaltet sein, zwischen denen das Werkstück während des Bearbeitungsprozesses ortsfest eingespannt ist. Solche Spannvorrichtungen können aber auch als Spannfutter mit mindestens drei radial zustellbaren Spannbacken ausgestaltet sein, um zwischen diesen das Werkstück aufzunehmen und während des Bearbeitungsprozesses der Werkzeugmaschine lageorientiert zu halten.

Oftmals sind solche Spannvorrichtungen an sogenannten Bearbeitungszentren angeordnet und werden gemeinsam mit einem Nullpunktspannsystem auf einer Palette oder einem Werkzeugtisch verwendet. Durch das Nullpunktspannsystem ist erreicht, dass die Spannvorrichtung beim Auswechseln gemeinsam mit dem Werkstück an exakt der identischen vorgegebenen Position montierbar ist. Dies bedeutet, dass bei einem Wechsel der Spannvorrichtung mit eingespanntem Werkstück keine erneuten Positionskalibrierungen erforderlich sind.

Die Paletten oder Werkzeugtische sind während des Bearbeitungsprozesses in Rotation versetzt. Somit wirken erhebliche Fliehkräfte während des Bearbeitungsprozesses auf das rotierende Werkstück und die Spannvorrichtung.

Es ist daher erforderlich sowohl beim Montieren des Werkstückes an der Spannvorrichtung als auch während des gesamten Bearbeitungsprozesses die exakte Position des Werkstückes in Bezug auf die Spannvorrichtung zu überwachen.

Es ist seit langem bekannt, solche Überwachungsvorgänge mittels eines Mediums, insbesondere Luft oder Gase, durchzuführen. Dabei ist es erforderlich, dass das Medium aus einem stationären Zustand in die rotierende Spannvorrichtung geleitet ist. Demnach ist an dem Übergangsbereich zwischen der stationären Bevorratungseinrichtung des Mediums und der rotierenden Spannvorrichtung eine Kopplungseinheit oder ein Adapter vorzusehen, durch den die Rotationsbewegung der Spannvorrichtung ausgeglichen ist. Darüber hinaus ist das Medium mit einem konstanten Druck in die jeweilige in dem Gehäuse der Spannvorrichtung eingearbeitete Bohrung einzupassen, denn die Druckluft soll an der Auflagefläche, also zwischen der Gehäuseoberseite der Spannvorrichtung und dem jeweils eingespannten Werkstück ausströmen.

Der Luftspalt zwischen der Auflagefläche der Spannvorrichtung und der dem Gehäuse der Spannvorrichtung zugewandten Unterseite des Werkstückes bildet demnach ein Maß für die dort vorherrschenden Drücke. Wenn nämlich der Abstand zwischen der Auflagefläche und dem Werkstück im Toleranzbereich, beispielsweise 0,02 mm liegt, dann herrscht ein bekannter Druckzustand, aus dem zu entnehmen ist, dass der Abstand zwischen dem Werkstück und dem Gehäuse korrekt ist bzw. im Toleranzbereich liegt. Sobald durch Fremdpartikel, beispielsweise Späne oder sonstige Verunreinigungen, oder durch die Reduzierung der erforderlichen Spannkraft der Spannbacken eine Positionsveränderung des Werkstückes vor oder während des Bearbeitungsprozesses eintritt, entsteht zwischen dem Werkstück und der Auflagefläche der Spannvorrichtung ein vergrößerter Luftspalt, durch den das Medium ausströmen kann. Dies führt zu einer Druckreduzierung im Bereich des Überganges zwischen der Auflagefläche und dem Werkstück. Dieser Druckabfall ist messbar und liefert daher Rückschlüsse darauf, dass die Position des Werkstückes nicht mehr korrekt vorhanden ist.

Als nachteilig bei diesen bekannten Überwachungseinrichtungen für Spannvorrichtungen hat sich herausgestellt, dass ein erheblicher konstruktiver Aufwand zu betreiben ist, um das Medium aus einer stationären Umgebung in die rotierende Umgebung der Spannvorrichtung und insbesondere an den Übergangsbereich zwischen der Auflagefläche und dem Werkstück zu transportieren. Dabei ist von technisch entscheidender Bedeutung, dass das Medium gleichmäßig und über die gesamte Dauer des Bearbeitungsprozesses zur Verfügung steht und an die gewünschte Austrittsstelle, also zwischen der Auflagefläche und dem Werkstück, mit einem konstanten Druckzustand eingepresst ist und dort mit einem vorgegebenen Druck ausströmt. Solche technisch bedingten Vorgaben führen zwangsweise zu einem erheblichen konstruktiven und kostenintensiven Aufwand.

Zudem weisen solche mechanisch betriebenen Überwachungsmaßnahmen den Nachteil auf, dass die Messwerte an eine externe Auswerteeinrichtung zu übermitteln sind. Der Druckabfall erfolgt zwar unmittelbar im Übergangsbereich zwischen dem Werkstück und der Auflagefläche der Spannvorrichtung, jedoch sind die Messwerte zunächst als Druckzustand zu erfassen und können erst mithilfe einer entsprechenden elektrischen Baueinheit in ein digitales Schaltsignal umgewandelt werden. Somit kann bei einer entsprechend negativen Abstandsveränderung zwischen dem Werkstück und der Auflagefläche nicht unverzüglich eine Abweichung des Toleranzbereiches an ein weiteres elektrisches Gerät, beispielsweise die Werkzeugmaschine zu deren sofortiger Abschaltung, übermittelt werden.

Es ist daher Aufgabe der Erfindung, eine Spannvorrichtung der eingangs genannten Gattung zur Verfügung zu stellen, an der vor und während des gesamten Bearbeitungsprozesses eine zuverlässige und überprüfbare Überwachung des Abstandes zwischen dem Werkstück und der Auflagefläche und/oder den Spannbacken der Spannvorrichtung erfolgt, ohne dass hierfür umfangreiche konstruktive Maßnahmen erforderlich sind. Gleichzeitig sollen die ermittelten Messergebnisse in Bezug auf den Abstand zwischen dem Werkstück und der Auflagefläche der Spannvorrichtung digital erzeugt sein und somit unverzüglich auswertbar und somit als Schaltsignal verwendbar sein.

Dadurch, dass in dem Gehäuse mindestens ein Freiraum eingearbeitet ist, dessen Symmetrieachse senkrecht zu der Auflagefläche verläuft und der dem eingespannten Werkstück mit der offenen Stirnseite zugewandt ist, und/oder dass in eine der Spannbacken mindestens ein Freiraum eingearbeitet ist, der in die jeweilige Spannfläche der Spannbacken mündet, dass in dem jeweiligen Freiraum ein Näherungssensor eingesetzt ist, dass durch den Näherungssensor ein Überwachungsbereich zwischen der Auflagefläche und dem Werkstück gebildet ist, der von einer Auswerteeinheit in Bezug auf die Anwesenheit des Werkstückes überwacht ist, ist die Position des Werkstückes beim Einsetzen, während des Spannvorganges und während des gesamten Bearbeitungsprozesses der Werkzeugmaschine überwacht und sobald sich der Abstand des Werkstückes zu der Auflagefläche als Referenzebene außerhalb eines vorgegebenen Toleranzbereiches verändert, stellt dies die Auswerteeinheit unverzüglich fest und generiert ein elektrisches bzw. digitales Schaltsignal, durch das die Werkzeugmaschine ohne Zeitverzögerung gestoppt werden kann.

Zudem ist besonders vorteilhaft, dass kein Medium in das rotierende Gehäuse der Spannvorrichtung zu transportieren ist. Somit entfallen sämtliche Kopplungsadapter zwischen der stationären Druckerzeugung und dem rotierenden Gehäuse der Spannvorrichtung, wodurch zum einen ein Freiraum an der Werkzeugmaschine geschaffen ist und zum anderen solche Medien vollständig entfallen können. Dies reduziert die Herstellungskosten erheblich.

Die für den Betrieb der induktiv betriebenen Näherungssensor erforderliche Energie kann dabei über elektrische Leitungen zur Verfügung gestellt sein. Gleichzeitig können durch diese elektrischen Leitungen Daten oder Signale an die Auswerteeinheit und von dieser an die Werkzeugmaschine oder sonstige elektrische Steuerungsgeräte übermittelt sein.

Es ist ohne weiteres vorstellbar, die elektrischen Leitungen durch eine induktiv betriebene Schnittstelle zu ersetzen, sodass die Auswerteeinheit sowohl innerhalb des Gehäuses der Spannvorrichtung als auch außerhalb angeordnet sein kann.

In der Zeichnung sind drei Spannvorrichtungen für unterschiedliche Anwendungen in der Spanntechnologie abgebildet, die nachfolgend näher erläutert sind. Im Einzelnen zeigt:
- Figur 1: eine Spannvorrichtung als Spannfutter mit einem Gehäuse, an dem ein Auflageelement zur Halterung eines Werkstückes montiert ist und drei in dem Gehäuse axial beweglich gelagerte Spannbacken, zwischen denen das Werkstück einzuspannen ist, in perspektivischer Ansicht,
- Figur 2: die Spannvorrichtungen gemäß Figur 1 im Schnitt mit einem optimal eingespannten Werkstück,
- Figur 3: die Spannvorrichtung gemäß Figur 1 mit einem fehlerhaft eingesetzten Werkstück,
- Figuren 4a und 4b: eine Spannvorrichtung als Nullpunkt-Spannsystem mit einem Gehäuse, durch das eine ringförmige Auflagefläche zur Halterung eines Werkstückes gebildet ist und drei in dem Gehäuse axial beweglich gelagerte Spannbacken, zwischen denen das Werkstück zur Zentrierung einzuspannen ist, in perspektivischer Ansicht, und 4
- Figur 5: eine Spannvorrichtung als Schraubstock mit einem Gehäuse, in dem zwei gegenüberliegende Spannbacken axial beweglich zur Halterung eines Werkstückes angeordnet sind und zwischen denen das zu bearbeitende Werkstück gehalten ist.

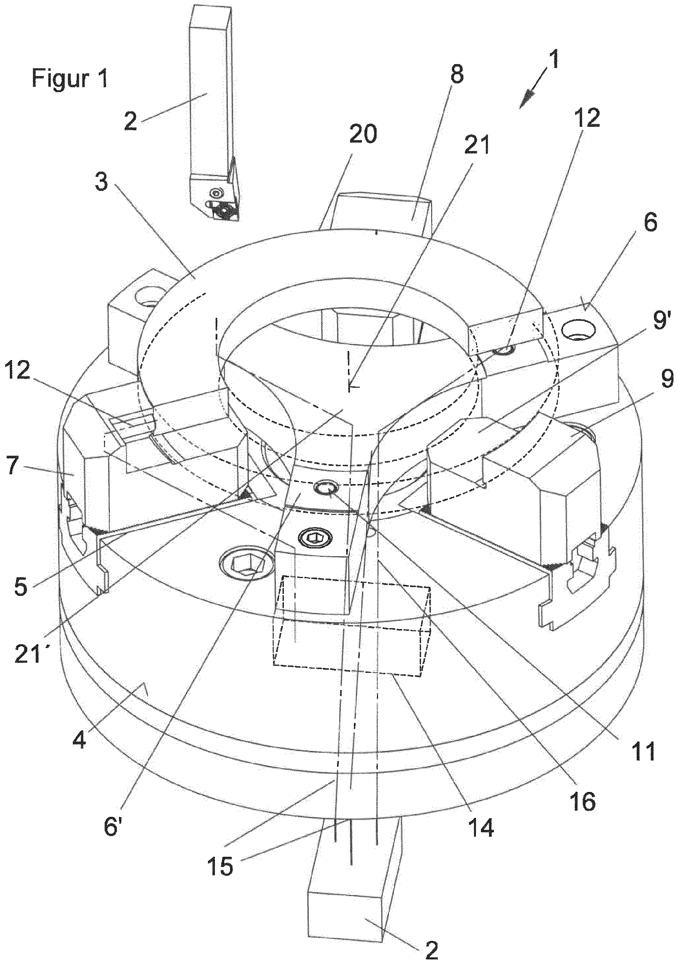

Den Figuren 1, 2 sowie 3 ist eine Spannvorrichtung 1 zu entnehmen, die im Bereich einer Werkzeugmaschine 2 angeordnet ist. Durch die Spannvorrichtung 1 soll ein durch die Werkzeugmaschine 2 zu bearbeitendes Werkstück 3 lageorientiert gehalten sein, sodass die entsprechenden Bearbeitungsvorgänge durch die Werkzeugmaschine 2 durchgeführt werden können. Da die einzelnen Bearbeitungsschritte der Werkzeugmaschine 2 möglichst mit geringen Fehlertoleranzen durchgeführt werden sollen, ist die Position des eingespannten Werkstückes 3 sowohl beim Einsetzen in die Spannvorrichtung 1 als auch während des gesamten Bearbeitungsprozesses der Werkzeugmaschine 2 zu überwachen.

Die Spannvorrichtung 1 besteht dabei aus einem Gehäuse 4, das während des Bearbeitungsprozesses der Werkzeugmaschine 2 üblicherweise in Rotation versetzt ist. In dem Gehäuse 4 sind drei Führungsnuten 5 eingearbeitet, die radial verlaufen, also in Richtung eines Mittelpunktes 21 des Gehäuses 4 gerichtet sind.

In die jeweilige Führungsnut 5 ist eine der drei Spannbacken 7, 8 bzw. 9 axial beweglich gelagert eingesetzt. Die Spannbacken 7, 8 und 9 können dabei hydraulisch, elektrisch oder mechanisch durch entsprechende Antriebsmittel, die im Inneren des Gehäuses 4 angeordnet und nicht dargestellt sind, angetrieben sein. Beim Entnehmen des Werkstückes 3 bewegen sich demnach die Spannbacken 7, 8 und 9 synchron nach außen und sobald ein neu zu bearbeitendes Werkstück 3 in die Spannvorrichtung 1 einzusetzen ist, werden die drei Spannbacken 7, 8 und 9 synchron in Richtung des Außenumfanges des Werkstückes 3 zugestellt, und zwar so lange, bis die Spannbacken 7, 8 und 9 in Wirkkontakt mit dem Werkstück 3 gelangen und eine entsprechende vorgegebene Haltekraft auf dieses ausüben.

Zudem ist an dem Gehäuse 4 ein Auflageelement 6 befestigt, das drei vom Mittelpunkt 21 abstehende Arme aufweist, durch die eine Auflagefläche 6' gebildet ist, auf der der das jeweilige Werkstück 3 aufliegt. Somit stützt die Auflagefläche 6' das Werkstück 3 in eine Richtung ab. Die drei Spannbacken 7, 8 und 9 zentrieren und spannen das Werkstück 3 parallel zu der von der Auflagefläche 6' gebildete Referenz-Ebene. Somit ist das Werkstück 3 im Raum zentriert gehalten, sobald die Spannbacken 7, 8 und 9 zugestellt sind.

Um nunmehr die Position des Werkstückes 3 bezogen auf die Auflagefläche 6' zu überwachen, sind in dem Gehäuse 4 zunächst drei zueinander versetzt angeordnete Bohrungen 11 eingearbeitet, die senkrecht zu der Auflagefläche 6' verlaufen und in Richtung des einzuspannenden Werkstückes 3 offen sind.

In die jeweilige Bohrung 11 ist ein induktiv betriebener Näherungssensor 12 eingesetzt, und zwar derart, dass die von dem Näherungssensor 12 gebildete Außenkontur etwas unterhalb von der Auflagefläche 6' verläuft. Zwischen dem einzuspannenden Werkstück 3 und dem jeweiligen Näherungssensor 12 ist demnach ein Luftspalt von beispielsweise 0,02 mm vorhanden. Selbst wenn das Werkstück 3 vollflächig auf der Auflagefläche 6' aufliegt, ist der vorgegebene Luftspalt zwischen dem Näherungssensoren 12 und dem Werkstück 3 vorhanden.

Aus Figur 1 ist zudem ersichtlich, dass die drei Spannbacken 7, 8 und 9 in einem Teilungswinkel von 120° angeordnet sind und dass die drei Bohrungen 11 zwischen zwei benachbarten Spannbacken 7, 8 oder 9 verlaufen. Folglich sind auch die Bohrungen 11 in einem Teilungswinkel von 120° angeordnet, sodass die Position des Werkstückes 3 beim Einsetzen und während des gesamten Bearbeitungsprozesses durch die in die Bohrungen 11 eingesetzten Näherungssensoren 12 überwacht ist.

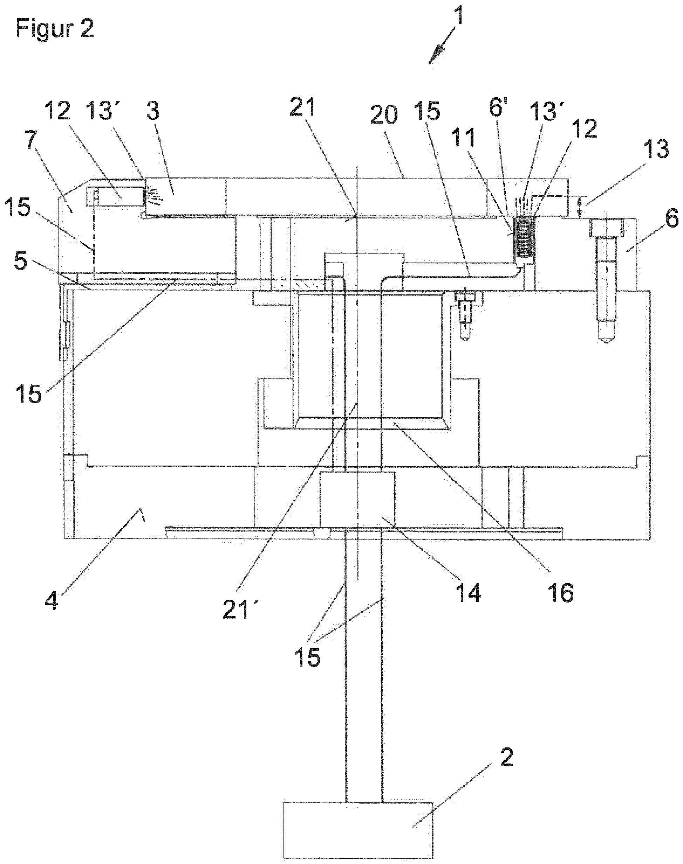

Aus Figur 2 ist zu entnehmen, dass das Werkstück 3 fehlerfrei auf der Auflagefläche 6' aufliegt und von den Spannbacken 7, 8 und 9 gleichmäßig arretiert ist. Demnach ist der Abstand zwischen der Unterseite des Werkstückes 3 und der Oberseite der Auflagefläche 6' über die gesamte Ebene der Auflagefläche 6' identisch. Durch die jeweiligen Näherungssensoren 12 ist ein Überwachungsbereich 13 gebildet, der schematisch eingezeichnet ist. Der Überwachungsbereich 13 erstreckt sich dabei über eine Distanz von 0,02 mm bis 3 mm. Die Distanz des Überwachungsbereichs 13 ist demnach ausreichend, um den gewünschten Abstand zwischen dem Werkstück 3 und der Auflagefläche 6' durch die Näherungssensoren 12 festzustellen. Der Überwachungsbereich 13 ist dabei durch schematisch eingezeichnete Feldlinien 13' gebildet, die auf die Unterseite des Werkstückes 3 treffen. Somit kann der jeweilige Näherungssensor 12 den Abstand zwischen diesem und dem eingespannten Werkstück 3 permanent überwachen.

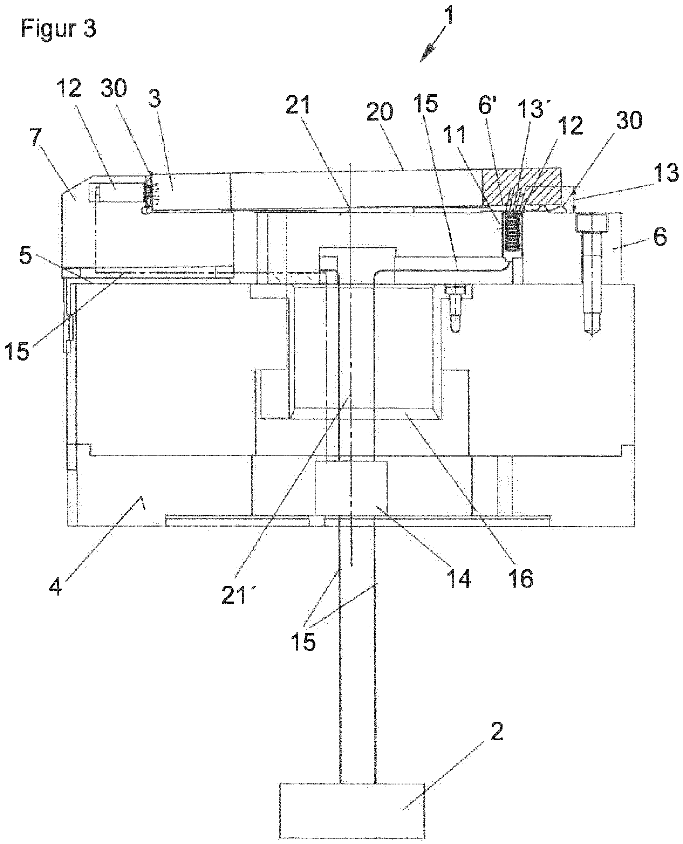

In Figur 3 sind zwischen der Auflagefläche 6' und dem Werkstück 3 Späne 30 vorgesehen, durch die die Position des Werkstückes 3 fehlerhafterweise verändert ist.

Die Bohrungen 11 können in Schlitten oder sonstigen beweglich gelagerten Bauteilen eingearbeiteten sein, um deren Position bezogen auf den Mittelpunkt 21 des Gehäuses 4 verändern zu können. Da sich nämlich der Durchmesser des zu bearbeitenden Werkstückes 3 vergrößert oder verkleinert, ist der Näherungssensor 12 und folglich die Bohrung 11 an den Durchmesser des Werkstückes 3 anzupassen.

Der jeweilige Näherungssensor 12 ist mittels einer elektrischen Leitung 15 an einer Auswerteeinheit 14 angeschlossen. Die von dem jeweiligen Näherungssensoren 12 ermittelten Messdaten in Bezug auf die Anwesenheit des Werkstückes 3 ist demnach elektrisch an die Auswerteeinheit 14 durch die elektrischen Leitungen 15 übermittelt. Die Auswerteeinheit 14 ist über weitere elektrische Leitungen 15 mit der Werkzeugmaschine 2 bzw. deren Steuereinrichtung verbunden. Folglich können Veränderungen des Abstandes zwischen dem jeweiligen Näherungssensor 12 und dem Werkstück 3 unverzüglich an die Auswerteeinheit 14 und von dieser an die Werkzeugmaschine 2 zu deren Notfallausschaltung übermittelt sein. Dieser Zustand ist beispielhaft in Figur 3 wiedergegeben, denn dort ist das Werkstück 3 schief eingesetzt, sodass der Luftspalt oder Abstand zwischen diesem und dem abgebildeten Näherungssensoren 12 größer ist als es der vorgegebene Toleranzbereich erlaubt. Sobald sich nämlich der Abstand zwischen dem Werkstück 3 und der Auflagefläche 6' um mehr als 0,02 mm vergrößert, liegt das Werkstück 3 außerhalb des vorgegebenen Toleranzfeldes. Zudem zeigt eine Veränderung des Abstands während des Bearbeitungsprozesses, dass durch die auftretenden Rotationskräfte das Werkstück 3 aus der sicheren Halteposition zwischen den Spannbacken 7, 8 und 9 verschoben ist. Solche Verschiebungen des Werkstückes 3 können jedoch dazu führen, dass sich dieses vollständig aus der Arretierung der Spannvorrichtung 1 löst. Aus Sicherheitsgründen ist daher die Werkzeugmaschine 2 unverzüglich abzuschalten und der Bearbeitungsvorgang zu beenden.

Die elektrischen Leitungen 15 sind dabei im Bereich der Symmetrieachse 21' des Gehäuses 4 gebündelt, die fluchtend zum Mittelpunkt 21 verläuft. Die Leitungen 15 können durch eine induktiv betriebene Schnittstelle 16 ersetzt sein, sodass die Kommunikation zwischen dem Näherungssensoren 12 und der Auswerteeinheit 14 induktiv betrieben ist. Dabei kann die Auswerteeinheit 14 ohne weiteres im Inneren des Gehäuses 4 oder außerhalb, also in der stationären Umgebung angeordnet sein.

In dem beschriebenen und dargestellten Ausführungsbeispiel ist als erfindungsgemäße Spannvorrichtung 1 ein Spannfutter mit den drei Spannbacken 7, 8 und 9 ausgewählt. Selbstverständlich können an solchen Spannvorrichtungen 1 auch mehrere der Spannbacken 7, 8, 9 verwendet sein und die Anzahl der Bohrungen 11 können über die Auflagefläche 6' um die gezeigte Kreisbahn 20 angeordnet sein. Die Kreisbahn 20 weist einen vorgegebenen Radius auf und der Mittelpunkt der Kreisbahn 20 ist der Mittelpunkt 21 des Gehäuses 4. Selbstverständlich können eine beliebige Anzahl von Bohrungen 11 mit einem unterschiedlichen Abstand zu dem Mittelpunkt 21 vorgesehen sein.

Es ist ohne weiteres möglich, bestehende Spannvorrichtungen 1 mit den erfindungsgemäßen Näherungssensoren 12 nachzurüsten, denn die jeweiligen erforderlichen Bohrungen 11 können auch nachträglich in das Gehäuse 4 eingearbeitet sein. Das Einsetzen und Betreiben der Näherungssensoren 12 über die elektrischen Leitungen 15 und der Auswerteeinheit 14 sind dabei nachrüstbar.

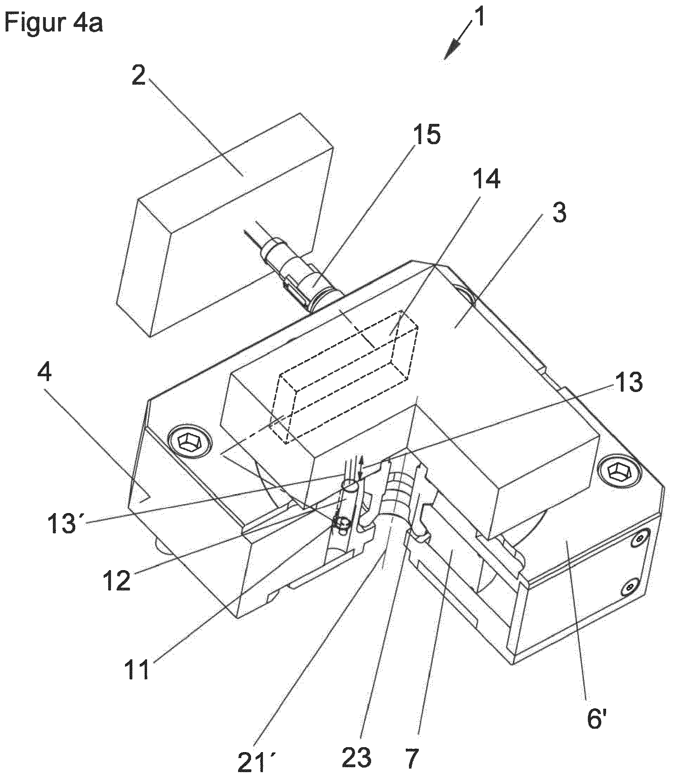

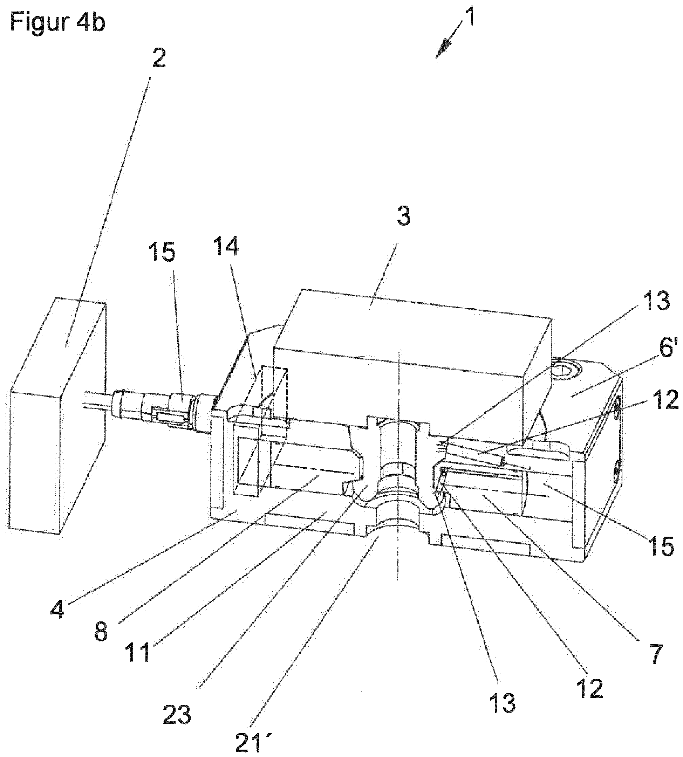

In den Figuren 4a und 4b ist die Spannvorrichtung 1 als sogenanntes NullpunktSpannsystem ausgestaltet und verwendet. Grundsätzlich zeichnet sich ein NullpunktSpannsystem 1 dadurch aus, dass durch dieses ein Spannbolzen, an dem das Werkstück 3 befestigt ist oder das Werkstück 3 unmittelbar zentriert im Raum gehalten ist. Durch die bekannten Nullpunkt-Spannsysteme soll nämlich das Werkstück 3 wiederholungsgenau an einer Palette oder einem Werkzeugtisch der Werkzeugmaschine 2 während des Bearbeitungsprozesses von identischen Werkstücken 3 angeordnet sein. Das Nullpunkt-Spannsystem 1 gibt demnach die exakte Referenz für die durchzuführenden Bearbeitungsvorgänge der Werkzeugmaschine 2 vor, denn jedes ausgewechselte Werkstück 3 soll möglichst exakt der vorherigen Position von baugleichen Werkstücken 3 entsprechen.

Ein das Werkstück tragender Spannbolzen 23 oder das Werkstück 3 werden durch die drei in dem Gehäuse 4 axial beweglich gelagerten Spannbacken 7, 8, 9 zum einen in das Innere des Gehäuses 4 gezogen und zum anderen arretieren die drei synchron aufeinander zustellbaren Spannbacken 7, 8, 9 das Werkstück 3 derart zentriert, dass dessen Position möglichst mit einer äußerst geringen Fehlertoleranz der vorherigen bzw. nachfolgenden Position von baugleichen Werkstücken 3 entspricht. Die Auflagefläche 6' ist daher als umlaufende Ringfläche ausgestaltet und weist eine Neigung gegenüber der Symmetrieachse 21' des Gehäuses 4 auf. Durch entsprechende konstruktive Maßnahmen zwischen den Spannflächen 7', 8', und 9' der Spannbacken 7, 8 und 9 entsteht demnach die erforderliche Zugwirkung, durch die das Werkstück 3 in das Innere des Gehäuses 4 eingezogen ist und zum anderen bildet die ringförmige Auflagefläche 6' aufgrund der vorgegebenen Neigung einen Anschlag für das Werkstück 3 aufnehmenden Stift oder das Werkstück 3 unmittelbar. Die Auflagefläche 6' ist unmittelbarer Bestandteil des Gehäuses 4

Die Bohrungen 11 sind dabei entweder in der Auflagefläche 6' und/oder in den Spannflächen 7', 8' und 9' der drei als Spannschieber bezeichneten Spannbacken 7, 8 und 9 eingearbeitet und die jeweils in die Bohrungen 11 eingesetzten Näherungssensoren 12 sind dem jeweiligen Werkstück 3 zugewandt, sodass durch die jeweils verwendeten Näherungssensoren 12 der Abstand zwischen diesen und dem Werkstück 3 bezogen auf deren Anordnung in der Auflagefläche 6' bzw. in den Spannbacken 7, 8 und 9 überwacht und gemessen ist.

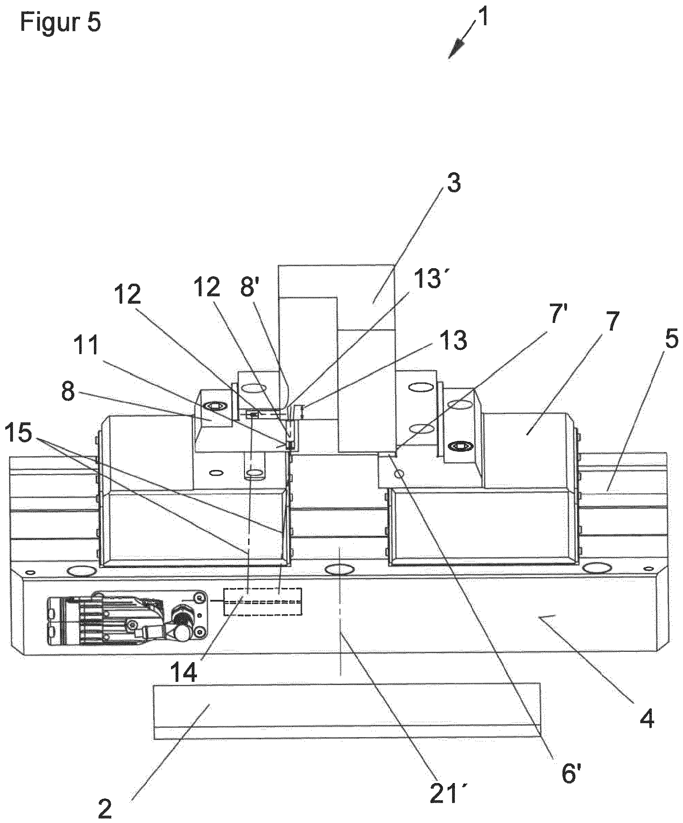

Die in Figur 5 dargestellte Spannvorrichtung 1 soll als Schraubstock mit zwei zueinander gegenüberliegenden Spannbacken 7 und 8 ausgestaltet und verwendbar sein. Die Spannbacken 7, 8 sind axial beweglich in dem Gehäuse 4 gelagert und können wahlweise voneinander weg oder aufeinander zu bewegt sein, um das Werkstück 3 freizugeben oder einzuspannen. Üblicherweise bewegen sich die beiden Spannbacken 7, 8 synchron, sodass das Werkstück 3 zu einer vorgegebenen Zentrierachse des Gehäuses 4 ausgerichtet und gehalten ist. Es ist jedoch auch vorstellbar, dass eine der Spannbacken 8 als ortsfester Gegenanschlag ausgestaltet ist und folglich lageorientiert an dem Gehäuse 4 vorgesehen ist. Somit bewegt sich ausschließlich die dazu gegenüberliegende Spannbacke 7 und das einzuspannende Werkstück 3 ist zwischen der Spannbacke 7 und dem Gegenanschlag 8 gehalten.

Es ist auch vorstellbar, dass dem Schraubstock 1 die Auflagefläche 6', die von dem Gehäuse 4 gebildet bzw. zur Verfügung gestellt ist, zugeordnet ist, sodass das einzuspannende Werkstück 3 auf dieser aufliegt. Die Spannbacken 7, 8 bewegen sich parallel und beabstandet zu der Auflagefläche 6' des Schraubstockes 1, sodass das Werkstück 3 auf der Auflagefläche 6' und zwischen den Spannbacken 7, 8 fixiert ist.

Zur Überprüfung des korrekten Abstandes zwischen dem Werkstück 3 und dem jeweilige Näherungssensoren 12, sind die Bohrungen 11 sowohl in der Auflagefläche 6' und/oder in den Spannflächen 7' und 8' bzw. im Gegenanschlag 8 eingearbeitet und weisen auf das jeweils zu haltende Werkstück 3.

## Patentansprüche

1. Spannvorrichtung (1) zur Halterung eines durch eine Werkzeugmaschine (2) zu bearbeitendes Werkstück (3), die als Spannfutter, Schraubstock oder NullpunktSpannsystem verwendet ist,
bestehend aus:
- einem Gehäuse (4),
- einem Auflageelement (6), das Bestandteil des Gehäuses (4) ist oder an dieses befestigt ist, und durch das eine Auflagefläche (6') gebildet ist, auf der das jeweilige Werkstück (3) während des Bearbeitungsprozesses aufliegt,
- mindestens einer in dem Gehäuse (4) axial beweglich gelagerten Spannbacke (7) und einem von dem Gehäuse (4) gebildeten Gegenanschlag oder einer axial beweglichen Spannbacke (8), zwischen denen das Werkstück (3) im Bereich der Auflagefläche (6') eingespannt ist oder mindestens drei in dem Gehäuse (4) axial beweglich gelagerten Spannbacken (7, 8, 9), zwischen denen das Werkstück (3) im Bereich der Auflagefläche (6') eingespannt ist,
**dadurch gekennzeichnet,**
- **dass** in dem Gehäuse (4) mindestens ein Freiraum (11) eingearbeitet ist, dessen Symmetrieachse senkrecht zu der Auflagefläche (6') verläuft und der dem eingespannten Werkstück (3) mit der offenen Stirnseite zugewandt ist, und/oder dass in eine der Spannbacken (7, 8, 9) mindestens ein Freiraum (11) eingearbeitet ist, der in die jeweilige Spannfläche (7', 8', 9') der Spannbacken (7, 8, 9) mündet,
- **dass** in dem jeweiligen Freiraum (11) ein Näherungssensor (12) eingesetzt ist,
- **dass** durch den Näherungssensor (12) ein Überwachungsbereich (13) zwischen der Auflagefläche (6') und dem Werkstück (3) gebildet ist, der von einer Auswerteeinheit (14) in Bezug auf die Anwesenheit des Werkstückes (3) überwacht ist.

2. Spannvorrichtung nach Anspruch 1,
**dadurch gekennzeichnet,**
**dass** drei Freiräume (11) in der Auflagefläche (6') in einem 120°-Teilungswinkel zueinander angeordnet sind.

3. Spannvorrichtung nach Anspruch 1 oder 2,
**dadurch gekennzeichnet,**
**dass** die Freiräume (11) in der Auflagefläche (6') auf einer Kreisbahn (20), die um einen Mittelpunkt (21) des Gehäuses (4) verläuft, angeordnet sind.

4. Spannvorrichtung nach einem der vorgenannten Ansprüche,
**dadurch gekennzeichnet,**
**dass** der Abstand der Freiräume (11) zu einem Mittelpunkt (21) des Gehäuses (4) variabel einstellbar ist in Abhängigkeit von dem Durchmesser des zu bearbeitenden Werkstückes (3) variabel einstellbar sind.

5. Spannvorrichtung nach einem der vorgenannten Ansprüche,
**dadurch gekennzeichnet,**
**dass** zwischen zwei benachbarten Freiräume (11) in der Auflagefläche (6') eine der Spannbacken (7, 8 oder 9) angeordnet ist.

6. Spannvorrichtung nach einem der vorgenannten Ansprüche,
**dadurch gekennzeichnet,**
**dass** die für den Betrieb benötigte Energie und/oder die für die Kommunikation erforderlichen elektrischen Signale zwischen dem jeweiligen Näherungssensor (12) und der Auswerteinheit (14) mittels einer induktiv betriebenen Schnittstelle (16) übertragen sind, die in dem Gehäuse (4) oder außerhalb des Gehäuses (4) angeordnet ist.

7. Spannvorrichtung nach einem der vorgenannten Ansprüche,
**dadurch gekennzeichnet,**
**dass** jeder der in eine dem Freiraum (11) eingesetzten Näherungssensoren (12) mittels einer elektrischen Leitung (15) oder einer induktiven Schnittstelle (16) an der Auswerteeinheit (14) angeschlossen ist.

8. Spannvorrichtung nach Anspruch 7,
**dadurch gekennzeichnet,**
**dass** die Auswerteeinheit (14) auf der Symmetrieachse (21') des Gehäuses (4) angeordnet ist und dass die elektrischen Leitungen (15) der jeweiligen Näherungssensoren (21) gebündelt an die Auswerteeinheit (14) und von dieser gebündelt nach außen geführt sind.

9. Spannvorrichtung nach einem der vorgenannten Ansprüche,
**dadurch gekennzeichnet,**
**dass** jeder der Näherungssensoren (12) einen Überwachungsbereich (13) von 0,02 mm bis 3 mm ausbildet und dass der Überwachungsbereich (13) als senkrecht von der Auflagefläche (6') abstehendes Feld ausgestaltet ist, in das das einzuspannende Werkstück (3) eintaucht.

10. Spannvorrichtung nach einem der vorgenannten Ansprüche,
**dadurch gekennzeichnet,**
**dass** der jeweilige Näherungssensor (12) induktiv, kapazitiv betrieben ist oder Lichtwellen jeweils zur Abstandsbestimmung emittiert ist.

## Geänderte Patentansprüche

### Geänderte Patentansprüche gemäss Regel 137(2) EPÜ.

1. Spannvorrichtung (1) zur Halterung eines durch eine Werkzeugmaschine (2) zu bearbeitenden Werkstücks (3), die als Spannfutter, Schraubstock oder Nullpunkt-Spannsystem verwendet ist,
bestehend aus:
- einem Gehäuse (4),
- einem Auflageelement (6), das Bestandteil des Gehäuses (4) ist oder an diesem befestigt ist, und durch das eine Auflagefläche (6') gebildet ist, auf der das jeweilige Werkstück (3) während des Bearbeitungsprozesses aufliegt,
- mindestens einer in dem Gehäuse (4) axial beweglich gelagerten Spannbacke (7) und einem von dem Gehäuse (4) gebildeten Gegenanschlag oder einer axial beweglichen Spannbacke (8), zwischen denen das Werkstück (3) im Bereich der Auflagefläche (6') eingespannt ist oder mindestens drei in dem Gehäuse (4) axial beweglich gelagerten Spannbacken (7, 8, 9), zwischen denen das Werkstück (3) im Bereich der Auflagefläche (6') eingespannt ist, wobei
- in dem Gehäuse (4) mindestens ein Freiraum (11) eingearbeitet ist, dessen Symmetrieachse senkrecht zu der Auflagefläche (6') verläuft und der dem eingespannten Werkstück (3) mit der offenen Stirnseite zugewandt ist, und/oder dass in eine der Spannbacken (7, 8, 9) mindestens ein Freiraum (11) eingearbeitet ist, der in die jeweilige Spannfläche (7', 8', 9') der Spannbacken (7, 8, 9) mündet,
- in dem jeweiligen Freiraum (11) ein Näherungssensor (12) eingesetzt ist,
- und durch den Näherungssensor (12) ein Überwachungsbereich (13) zwischen der Auflagefläche (6') und dem Werkstück (3) gebildet ist, der von einer Auswerteeinheit (14) in Bezug auf die Anwesenheit des Werkstückes (3) überwacht ist,
**dadurch gekennzeichnet,**
- **dass** der Abstand der Freiräume (11) zu einem Mittelpunkt (21) des Gehäuses (4) in Abhängigkeit von dem Durchmesser des zu bearbeitenden Werkstückes (3) variabel einstellbar ist.

2. Spannvorrichtung nach Anspruch 1,
**dadurch gekennzeichnet,**
**dass** drei Freiräume (11) in der Auflagefläche (6') in einem 120°-Teilungswinkel zueinander angeordnet sind.

3. Spannvorrichtung nach Anspruch 1 oder 2,
**dadurch gekennzeichnet,**
**dass** die Freiräume (11) in der Auflagefläche (6') auf einer Kreisbahn (20), die um einen Mittelpunkt (21) des Gehäuses (4) verläuft, angeordnet sind.

4. Spannvorrichtung nach einem der vorgenannten Ansprüche,
**dadurch gekennzeichnet,**
**dass** zwischen zwei benachbarten Freiräume (11) in der Auflagefläche (6') eine der Spannbacken (7, 8 oder 9) angeordnet ist.

5. Spannvorrichtung nach einem der vorgenannten Ansprüche,
**dadurch gekennzeichnet,**
**dass** die für den Betrieb benötigte Energie und/oder die für die Kommunikation erforderlichen elektrischen Signale zwischen dem jeweiligen Näherungssensor (12) und der Auswerteinheit (14) mittels einer induktiv betriebenen Schnittstelle (16) übertragen sind, die in dem Gehäuse (4) oder außerhalb des Gehäuses (4) angeordnet ist.

6. Spannvorrichtung nach einem der vorgenannten Ansprüche,
**dadurch gekennzeichnet,**
**dass** jeder der in eine dem Freiraum (11) eingesetzten Näherungssensoren (12) mittels einer elektrischen Leitung (15) oder einer induktiven Schnittstelle (16) an der Auswerteeinheit (14) angeschlossen ist.

7. Spannvorrichtung nach Anspruch 6,
**dadurch gekennzeichnet,**
**dass** die Auswerteeinheit (14) auf der Symmetrieachse (21') des Gehäuses (4) angeordnet ist und dass die elektrischen Leitungen (15) der jeweiligen Näherungssensoren (21) gebündelt an die Auswerteeinheit (14) und von dieser gebündelt nach außen geführt sind.

8. Spannvorrichtung nach einem der vorgenannten Ansprüche,
**dadurch gekennzeichnet,**
**dass** jeder der Näherungssensoren (12) einen Überwachungsbereich (13) von 0,02 mm bis 3 mm ausbildet und dass der Überwachungsbereich (13) als senkrecht von der Auflagefläche (6') abstehendes Feld ausgestaltet ist, in das das einzuspannende Werkstück (3) eintaucht.

9. Spannvorrichtung nach einem der vorgenannten Ansprüche,
**dadurch gekennzeichnet,**
**dass** der jeweilige Näherungssensor (12) induktiv, kapazitiv betrieben ist oder Lichtwellen jeweils zur Abstandsbestimmung emittiert ist.
